(19) Europäisches Patentamt
European Patent Office
Office européen des brevets

(11) Veröffentlichungsnummer: **0 469 316 A2**

(12) # EUROPÄISCHE PATENTANMELDUNG

(21) Anmeldenummer: **91110975.9**

(22) Anmeldetag: **03.07.91**

(51) Int. Cl.[5]: **C08J 3/03**, C08L 83/06, C08L 83/08, D06M 15/65

(30) Priorität: **01.08.90 DE 4024403**

(43) Veröffentlichungstag der Anmeldung: **05.02.92 Patentblatt 92/06**

(84) Benannte Vertragsstaaten: **AT BE CH DE ES FR GB GR IT LI NL**

(71) Anmelder: **Pfersee Chemie GmbH**
**Rehlinger Str. 1 Postfach 1153**
**W-8901 Langweid am Lech(DE)**

(72) Erfinder: **Chrobaczek, Hararld, Dr.**
**Oblatterwallstrasse 40**
**W-8900 Augsburg(DE)**
Erfinder: **Lechlmair, Josef**
**Iselerstrasse 15 c**
**W-8900 Augsburg(DE)**

(54) **Wässrige Dispersion auf Basis von Silikonen, deren Herstellung und Verwendung.**

(57) Die vorliegende Erfindung betrifft eine wäßrige Dispersion auf Basis von Silikonen, welche a) ein Polysiloxan mit epoxifunktionellen Gruppen und b) ein Polysiloxan mit sowohl amino-als auch amidofunktionellen Gruppen oder ein Umsetzungsprodukt von a) mit b) enthält
Außerdem wird die Verwendung dieser wäßrigen Dispersionen zur Behandlung, insbesondere Weichgriffbehandlung von Fasermaterialien beschrieben.

Die Vorteile der erfindungsgemäßen Dispersionen sind vor allem darin zu sehen, daß hervorragende Weichgriffeffekte und gleichzeitig eine gute Sprungelastizität ohne Mitverwendung von Katalysatoren erhalten werden, wobei besonders hervorzuheben ist, daß diese Effekte überaus wasch- und reinigungsbeständig sind und außerdem eine negative Beeinflussung des Weißgrades (Vergilbung) kaum zu beobachten ist.

EP 0 469 316 A2

Die Erfindung betrifft eine wäßrige Dispersion. welche als Komponenten

a) ein Polysiloxan mit durchschnittlich mindestens zwei an verschiedene Si-Atome gebundenen Resten pro Molekül, die je eine Epoxygruppe enthalten,

b) ein Polysiloxan mit durchschnittlich einer oder mehreren Stickstoff enthaltenden Gruppen pro Siloxanmolekül, wobei in diesen Gruppen mindestens ein Teil der Stickstoffatome in Form von primären oder sekundären Aminogruppen vorliegt und durchschnittlich mindestens zwei Stickstoffatome pro Polysiloxanmolekül anwesend sind,

enthält

und/oder welche ein Produkt enthält, das durch mindestens teilweise Umsetzung der Komponente a) mit Komponente b) entsteht. Sie betrifft ferner ein Verfahren zur Herstellung solcher Dispersionen und ihre Verwendung zur Behandlung von Fasermaterialien.

Wäßrige Dispersionen der oben genannten Art sind bekannt, z.B. aus der DE-A 20 16 095.

Fasermaterialien, insbesondere in Form textiler Flächengebilde, werden häufig mit Polysiloxan enthaltenden Dispersionen behandelt, um ihnen einen angenehm weichen Griff, den sogenannten Silikongriff, zu verleihen. Um die Beständigkeit solcher Ausrüstungen gegenüber Waschprozessen zu erhöhen, wurden bereits Silikone mit reaktiven Gruppen, z.B. mit Si-H-Bindungen eingesetzt, die bei Anwesenheit eines Metallsalzkatalysators auf den Textilien zu vernetzten Produkten ausgehärtet werden können. Der Nachteil von Produkten mit Si-H-Bindungen besteht darin, daß sie bei Lagerung Wasserstoff abspalten können. Ein anderer Weg wird gemäß DE-A 20 16 095 beschritten. Nach der Lehre dieser Schrift kann ein Gemisch eines Aminogruppen enthaltenden Silikons mit einem Epoxygruppen enthaltenden Silikon zur Behandlung von Fasermaterial verwendet werden, wobei eine Vernetzung durchgeführt wird. Der Nachteil der Verwendung ausschließlich aminofunktionelle Gruppen enthaltender Siloxane liegt darin, daß die entsprechenden Produkte zur Vergilbung neigen, wodurch das Textilmaterial ein unansehnliches Aussehen erhält. Dies gilt insbesondere für den Fall ungefärbter Textilien. Die Vergilbungsneigung wird noch verstärkt durch thermische Behandlungsprozesse. Auch die Waschbeständigkeit der Ausrüstung gemäß der DE-A 20 16 095 ist noch nicht voll zufriedenstellend.

Der vorliegenden Erfindung lag deshalb die Aufgabe zugrunde, ein Mittel zur Verfügung zu stellen, das sich zur Weichgriffausrüstung von Fasermaterial eignet, das gegenüber bekannten Mitteln verringerte Vergilbungsneigung aufweist, also zu einem verbesserten Weißgrad der ausgerüsteten Fasermaterialien führt, das leicht herstellbar und gut lagerbeständig ist und das einen angenehm weichen Griff der Fasermaterialien bewirkt.

Die Aufgabe wurde gelöst durch eine wäßrige Dispersion gemäß Oberbegriff von Patentanspruch 1, die dadurch gekennzeichnet ist, daß in mindestens 25 % aller Stickstoff enthaltenden Gruppen von Komponente b) eine Amidogruppe vorliegt und daß in mindestens 50 % aller Stickstoff enthaltenden Gruppen von Komponente b) eine primäre oder sekundäre Aminogruppe vorliegt. Bevorzugte Ausführungsformen gehen aus den Unteransprüchen hervor.

Die erfindungsgemäßen wäßrigen Dispersionen weisen eine Reihe von Vorteilen auf, die sie für die Textilausrüstung besonders gut geeignet machen:

- Sie sind über lange Zeit, auch bei Temperaturen, die etwas höher als Raumtemperatur liegen, lagerstabil, d.h. es findet keine Trennung der Dispersionen in zwei Phasen statt. Die Effektivität geht bei Lagerung nicht zurück, während z.B. Dispersionen von Siloxanen mit Si-H-Bindungen häufig den Nachteil ungenügender Lagerstabilität (Freisetzung von Wasserstoff) besitzen, so daß sie bereits relativ kurze Zeit nach ihrer Herstellung verwendet werden müssen. Die erfindungsgemäßen Dispersionen können als lagerstabiles Einkomponentensystem an Kunden ausgeliefert werden. Dies gilt auch dann, wenn die Komponenten a) (Epoxygruppen enthaltendes Polysiloxan) und b) (Amino-/Amidogruppen enthaltendes Polysiloxan) als Gemisch in nicht miteinander umgesetzter Form vorliegen.
- Es ist bei den erfindungsgemäßen Dispersionen kein Metallsalzkatalysator zur Vernetzung erforderlich, was Vorteile in Beziehung auf Umweltschutz (Abwasser) mit sich bringt.
- Erfindungsgemäße Dispersionen lassen sich bei Verwendung geeigneter Dispergatoren in vielen Fällen in Form von Mikroemulsionen herstellen und verwenden. Unter Mikroemulsionen bzw. -dispersionen werden hierbei transparente oder nahezu transparente Systeme verstanden, in welchen die dispergierten Teilchen eine deutlich geringere durchschnittliche Größe aufweisen können als in herkömmlichen milchigen Emulsionen. Diese Mikroemulsionen besitzen eine außergewöhnlich gute Lagerstabilität. Mikroemulsionen lassen sich sowohl dann erhalten, wenn die Komponenten a) und b) in nicht miteinander umgesetzter Form vorliegen, als auch dann, wenn schon eine Umsetzung stattgefunden hat.
- Die mit den erfindungsgemäßen Dispersionen ausgerüsteten Fasermaterialien besitzen einen angenehm weichen Griff, ihr Weißgrad wird im Vergleich zur Ausrüstung mit Produkten gemäß DE-A 20 16 095 nicht oder nur in wesentlich geringerem Ausmaß verschlechtert.

- Die Waschbeständigkeit der Ausrüstung mit erfindungsgemäßen Mitteln ist sehr gut.
- Es ist, z.B. durch Modifizierung der Komponente a) mit Polyoxyethylen-und/oder Polyoxypropylengruppen, möglich, die Hydrophilie der ausgerüsteten Textilien gezielt zu beeinflussen. Der Einbau solcher Gruppen in das Epoxygruppen enthaltende Polysiloxan führt nicht zu einer Reduzierung der übrigen, oben genannten, Vorteile.
- Durch die Behandlung mit erfindungsgemäßen Dispersionen werden den Fasermaterialien, wie z.B. Textilien, elastische Eigenschaften verliehen, so daß ihre Formstabilität gegenüber unbehandelten Materialien verbessert ist.

Die erfindungsgemäßen wäßrigen Dispersionen enthalten mindestens zwei Komponenten a) und b), die entweder als Gemisch nebeneinander vorliegen oder die bereits mindestens teilweise miteinander umgesetzt vorliegen. Liegen die Komponenten a) und b) in nicht-umgesetzter oder in teilweise umgesetzter Form vor, so findet nach dem Aufbringen auf das Fasermaterial durch eine thermische Behandlung, z.B. beim Trockenprozeß, eine (weitergehende) Umsetzung statt, wodurch Produkte erhalten werden, die eine gute Waschbeständigkeit der Ausrüstung bewirken. Eine nur teilweise Umsetzung der Komponente a) mit Komponente b) in der wäßrigen Dispersion vor Aufbringen auf das Fasermaterial ist einer vollständigen Umsetzung im Normalfall vorzuziehen, da im letzteren Fall die Möglichkeit besteht, daß keine stabilen wäßrigen Dispersionen mehr erhalten werden können. In Einzelfällen kann jedoch eine vollständige Umsetzung unter Umständen möglich sein.

Komponente a):

Die Komponente a) ist ein Polysiloxan, in dem pro Molekül durchschnittlich mindestens zwei Reste vorliegen, die je eine Epoxygruppe enthalten. Diese beiden Reste sind nicht an das gleiche Si-Atom gebunden. Polysiloxane liegen im Normalfall als ein Gemisch von Einzelverbindungen vor, die sich durch ihr Molekulargewicht, d.h. ihren Polymerisationsgrad, unterscheiden. Daher bedeutet die Angabe "durchschnittlich" in Anspruch 1, daß zwar Moleküle anwesend sein können, die nur einen oder keinen der genannten Reste enthalten, daß jedoch die Gesamtzahl dieser Reste mindestens doppelt so hoch sein muß wie die Anzahl der einzelnen Polysiloxanmoleküle. Die durchschnittliche Anzahl dieser Reste im verwendeten Polysiloxan läßt sich durch die Herstellungsbedingungen steuern und analytisch über Bestimmung der Epoxygruppen ermitteln. Bevorzugt sind die Epoxygruppen enthaltenden Reste so aufgebaut, daß sich zwischen der Epoxygruppe und dem betreffenden Si-Atom eine Alkylengruppe mit 2 bis 8 C-Atomen befindet. Als besonders geeignet haben sich Polysiloxane erwiesen, bei denen diese Alkylengruppe aus 4 bis 5 C-Atomen besteht. Die Alkylengruppen können gegebenenfalls durch ein Sauerstoffatom unterbrochen sein. Die Epoxygruppen enthaltenden Reste können eines oder beide der Enden der Polysiloxanhauptkette darstellen, sie können jedoch auch als Seitenkette(n) des Polysiloxans vorliegen. In beiden Fällen stellt vorzugsweise eine Epoxygruppe das dem betreffenden Si-Atom abgewandte Ende des jeweiligen Restes dar.

Unter anderem aus Kostengründen werden bevorzugt lineare Polydimethylsiloxane verwendet, welche durch entsprechende funktionelle Reste modifiziert sind, also Polydimethylsiloxane, in denen mindestens zwei der Methylgruppen, jedoch höchstens eine Methylgruppe pro Si-Atom, durch solche Reste ersetzt sind.

Auch die unten beschriebene Komponente b) (Polysiloxan mit Stickstoff enthaltenden Gruppen) ist vorzugsweise ein entsprechend modifiziertes lineares Polydimethylsiloxan. Diese bevorzugt verwendeten modifizierten Polydimethylsiloxane können neben Epoxyfunktionen bzw. Amino-/Amidofunktionen noch durch weitere Gruppen modifiziert sein; so entstehen beispielsweise beim Ersatz weiterer Methylgruppen durch Polyoxyethylen- und/oder Polyoxypropylengruppen enthaltende Reste weitere bevorzugte Produkte, die unten beschrieben werden.

Für die Verwendung als Komponente a) geeignete Polysiloxane mit Epoxygruppen enthaltenden Resten sind z.B. beschrieben in US-PS 3 055 774, DE-A 20 16 095 und US-PS 3 980 599.

Den mit erfindungsgemäßen Dispersionen behandelten Fasermaterialien können nach Wunsch abgestufte und einstellbare hydrophile Eigenschaften dadurch verliehen werden, daß die Komponente a) außer Resten mit Epoxygruppen auch noch Polyoxyethylen- und/oder Polyoxypropylengruppen enthält. Bevorzugt sind diese Polyoxyalkylengruppen in Seitenketten des Polysiloxans anwesend. Für den Fall, daß in einer Seitenkette sowohl Polyoxyethylen-als auch Polyoxypropylengruppen anwesend sind, kann es sich hierbei um eine "random"-oder eine "Block"-Verteilung der Polyoxyalkylengruppen handeln. Die Polyoxyalkylengruppen sind bevorzugt über Alkylengruppen an das betreffende Si-Atom gebunden. Bevorzugt sind Polysiloxane, welche folgende Struktureinheit einmal oder mehrfach enthalten:

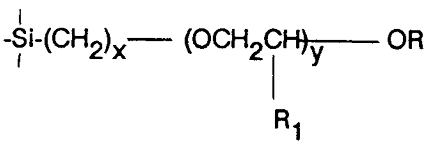

wobei x Werte von 1 bis 4 und y Werte von 5 bis 150, insbesondere 5 bis 70 annimmt, R1 Wasserstoff oder $-CH_3$ ist und R Wasserstoff oder $-COCH_3$ ist.

Als Komponente a) sind insbesondere Epoxygruppen enthaltende Polysiloxane gut geeignet, welche eine Epoxyzahl von 0,02 bis 1,0, insbesondere von 0,05 bis 1,0 aufweisen.

Komponente b:

Die Komponente b) ist ein Polysiloxan, in dem pro Polysiloxanmolekül durchschnittlich eine oder mehrere Stickstoff enthaltende Gruppen anwesend sind. Was die Bedeutung des Worts "durchschnittlich" angeht, so gelten hier sinngemäß die oben zu Komponente a) gemachten Angaben. In dem verwendeten Polysiloxan sind durchschnittlich mindestens zwei Stickstoffatome pro Polysiloxanmolekül anwesend. Diese können in der gleichen Stickstoffenthaltenden Gruppe oder in verschiedenen Gruppen vorliegen. Für den Fall, daß durchschnittlich nur eine Stickstoff enthaltende Gruppe pro Polysiloxanmolekül anwesend ist, muß diese also mindestens zwei Stickstoffatome enthalten. Unter Gruppe wird hierbei ein einwertiger, an ein Si-Atom gebundener Rest verstanden, wobei das Si-Atom immer mit einem Kohlenstoffatom dieser Gruppe direkt verbunden ist.

Die Stickstoffatome liegen in den genannten Gruppen sowohl in Form von primären und/oder sekundären Aminogruppen vor als auch in Form von Amidogruppen. Daneben können noch zusätzlich weitere Stickstoffatome in anderer Form im Polysiloxan anwesend sein, z.B. in Form tertiärer Aminogruppen. Von allen anwesenden Stickstoff enthaltenden Gruppen müssen jedoch mindestens 25 % eine Amidogruppe enthalten und mindestens 50 % eine primäre und/oder sekundäre Aminogruppe. Vorzugsweise sind Gruppen anwesend, welche sowohl eine oder mehrere Amino-, als auch eine oder mehrere Amidogruppen enthalten; unter diesen sind wiederum diejenigen Gruppen bevorzugt, welche zwei Stickstoffatome enthalten, von denen das eine in Form einer primären oder sekundären Amino-, das andere in Form einer Amidogruppe vorliegt. Es ist günstig, wenn der Gehalt an Amidogruppen höher ist als der oben genannte Minimalwert (Amidofunktion in mindestens 25% aller Gruppen). Gute Effekte mit erfindungsgemäßen Dispersionen werden erhalten, wenn in 50 bis 100 % aller Stickstoff enthaltenden Gruppen von Komponente b) eine Amidogruppe vorliegt. Dies bedeutet bei Werten von mehr als 50 %, daß Gruppen anwesend sein müssen, die sowohl primäre bzw. sekundäre Aminogruppen als auch Amidogruppen enthalten.

Die in den Polysiloxanen von Komponente b) anwesenden Amidogruppen verringern die Vergilbungstendenz gegenüber Produkten aus dem Stand der Technik, welche nur Aminofunktionen aufweisen; die primären bzw. sekundären Aminogruppen dienen zur Umsetzung mit den Epoxygruppen von Komponente a) (Vernetzung).

Die Stickstoff enthaltende(n) Gruppe(n) von Komponente b) können sich am Ende der Hauptkette oder in einer Seitenkette des Polysiloxans befinden. Bevorzugt leiten sich die Polysiloxane, die als Komponente b) verwendet werden, von Polydimethylsiloxanen ab. Sie unterscheiden sich von diesen durch den Ersatz einer oder mehrerer $CH_3$-Gruppe(n) durch (eine) Stickstoff enthaltende Gruppe(n). Gegebenenfalls können sie jedoch auch von anderen Polysiloxanen abgeleitet sein, z.B. solchen, welche an Si-Atome gebundene längere Alkylreste, Vinylreste oder Phenylreste enthalten.

Die Enden der Hauptkette des als Komponente b) verwendeten Polysiloxans können entweder durch die genannten Stickstoff enthaltenden Gruppen gebildet werden oder durch andere Gruppen wie z.B. Trimethylsilylgruppen oder Hydroxydimethylsilylgruppen. Es können auch verzweigte Polysiloxane mit N enthaltenden Gruppen eingesetzt werden, soweit sich aus ihnen stabile wäßrige Disperionen der in Anspruch 1 genannten Zusammensetzung erhalten lassen.

Bevorzugt werden als Komponente b) der erfindungsgemäßen wäßrigen Dispersionen Polysiloxane eingesetzt, in denen eine oder mehrere Gruppen der nachfolgenden Formel an je ein Si-Atom gebunden sind:

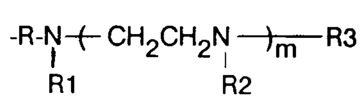

Der Rest R, der direkt an Si gebunden ist, stellt hierbei einen zweiwertigen Kohlenwasserstoffrest dar. Dieser Rest enthält 2 bis 10 C-Atome, vorzugsweise 3 bis 4 C-Atome und kann durch eine Sauerstoffbrücke unterbrochen sein.

Die Reste R1 und R2 stehen unabhängig voneinander für Wasserstoff, einen unverzweigten oder verzweigten Alkylrest mit 1 bis 4 C-Atomen oder für den Rest -COR4. Von der Summe aller im Polysiloxan anwesender Reste R1 und R2 stehen jedoch mindestens 25 % für den Rest - COR4. Der Rest R3 ist Wasserstoff oder ein unverzweigter oder verzweigter Alkylrest mit 1 bis 4 C-Atomen. Der Rest R4 ist ein unverzweigter oder verzweigter Alkylrest mit 1 bis 8 Kohlenstoffatomen. Der Rest R4 kann ggf. Substituenten tragen. Besonders günstige Ergebnisse werden erhalten, wenn ein Teil oder alle der anwesenden Reste R4 für einen unverzweigten Alkylrest mit 1 bis 4 C-Atomen stehen, der durch eine Hydroxylgruppe substituiert ist. Vorzugsweise befindet sich diese Hydroxylgruppe am Ende der Kette, ist also so weit wie möglich von der -CO-Gruppe entfernt, mit der R4 verbunden ist. Wenn der Rest R4 eine Hydroxylgruppe enthält, liegt diese vorzugsweise in freier Form vor, kann aber auch mit Carbonsäure verestert bzw. mit Aldehyd oder Keton acetalisiert oder ketalisiert vorliegen. m besitzt in der oben angegebenen Formel den Wert 0 oder 1.

Polysiloxane, in welchen Stickstoff enthaltende Gruppen anwesend sind und welche sich als Komponente b) für die erfindungsgemäßen Dispersionen eignen, sind in der EP-A 342 830 und in der EP-A 342 834 beschrieben.

Wenn in den Stickstoff enthaltenden Polysiloxanen (Komponente b) neben Gruppen, welche eine Amidofunktion enthalten, auch Stickstoff enthaltende Gruppen ohne Amidofunktion anwesend sind, so besitzen diese keine Amidofunktion enthaltenden Gruppen vorzugsweise die folgende Struktur:

-A-(NH)q-Y-Z

worin A an ein Si-Atom gebunden ist und worin A und Y unabhängig voneinander jeweils zweiwertige Kohlenwasserstoffreste mit 1 bis 8, insbesondere 2 bis 4 C-Atomen sind, Z für Wasserstoff oder $-NH_2$ steht und q den Wert 0 oder 1 hat.

Weitere als Komponente b) geeignete Polysiloxane sind solche, welche eine oder mehrere Gruppen der Formel

-R5-NH-X-OR6

enthalten, wobei X -R7-NHCO-R8- oder COR8- bedeutet und R5, R6, R7 und R8 die nachfolgend angegebene Bedeutung aufweisen. Besonders geeignet aber sind als Polysiloxane b) Polydialkylinsbesondere Polydimethylsiloxane mit modifizierten, an Silicium gebundenen Aminogruppen der nachfolgenden Formel

-R5-NH-R7-NHCO-R8-OR6,

in der R5 einen zweiwertigen Kohlenwassertoffrest mit 2 bis 8, insbesondere 2 bis 4 C-Atomen, R7 einen zweiwertigen Kohlenwasserstoffrest mit 1 bis 4, insbesondere 2 C-Atomen, R8 einen zweiwertigen Kohlenwasserstoffrest mit 2 bis 10, insbesondere 2 bis 4 C-Atomen und R6 einen Alkylrest mit 1 bis 3 C-Atomen oder bevorzugt Wasserstoff bedeuten. Dabei liegt die alkoholische OH-Gruppe (wenn R6 = H) bevorzugt in freier Form vor, kann aber auch mit niedrigen Carbonsäuren, Aldehyden oder Ketonen bzw. Ketocarbonsäuren verestert bzw. acetalisiert oder ketalisiert vorliegen. Die vorstehend genannten Gruppen sind bevorzugt als Seitenketten im Polysiloxan b) zugegen.

Es ist günstig, wenn die in den erfindungsgemäßen Dispersionen enthaltenen Komponenten a) und b) jeweils eine Viskosität bei 20 °C von 20 bis 50.000, insbesondere 20 bis 10.000 mPa.s aufweisen.

Die erfindungsgemäßen Dispersionen enthalten die Komponenten a) und b) vorzugsweise in solchen Mengenverhätnissen, daß 0,8 bis 14, insbesondere 2 bis 10 Epoxygruppen aus Komponente a) pro Aminogruppe von Komponente b) vorliegen, unabhängig davon, ob es sich hierbei um eine primäre oder sekundäre Aminogruppe handelt. Sollten zusätzlich tertiäre Aminogruppen in Komponente b) anwesend sein, werden diese bei der Berechnung des genannten Mengenverhältnisses nicht mitgezählt.

Die erfindungsgemäßen Dispersionen können die Komponenten a) und b) als Gemisch enthalten, ohne daß bereits eine Umsetzung zwischen den beiden Komponenten stattgefunden hat. Die Komponenten a) und b) können jedoch auch bereits mindestens teilweise miteinander reagiert haben, wobei, wie oben erwähnt, einer teilweisen Umsetzung gegenüber einer vollständigen der Vorzug zu geben ist. In diesem Fall enthalten die erfindungsgemäßen Dispersionen also Produkte, welche durch Umsetzung von Komponente a)

mit Komponente b) entstehen. Daneben können zusätzlich Anteile an noch nicht umgesetzten Komponenten a) und b) vorliegen.

Es ist in einer Reihe von Fällen vorteilhaft, wenn in den erfindungsgemäßen wäßrigen Dispersionen Produkte enthalten sind, die durch teilweise Umsetzung der Komponenten a) und b) miteinander entstehen. Vielfach können in diesem Fall die Bedingungen für die (vollständige) Umsetzung auf dem Fasermaterial milder gewählt werden. Auch die auf dem Fasermaterial erzeugten Effekte wie z.B. Knitterfesteffekte, werden hierdurch vielfach verbessert.

Zur mindestens teilweisen Umsetzung werden in einer bevorzugten Ausführungsform die Polysiloxane a) und b) vor der Dispergierung einer Temperaturbehandlung bei 10 bis 220 °C, insbesondere 60 bis 90 °C in Substanz oder organischer Lösung unterworfen. Die Zeit für die Umsetzung hängt selbstverständlich von der Temperatur und dem gewünschten Umsetzungsgrad ab und wird in der Regel zwischen 5 Minuten und 72 Stunden, insbesondere zwischen 30 Minuten und 24 Stunden, ganz besonders bevorzugt zwischen 1 und 5 Stunden liegen. Der Endpunkt der Umsetzung ist nicht kritisch. Doch wird bevorzugt die Umsetzung beendet, wenn die Viskosität der Umsetzungsprodukte bei Zimmertemperatur den 1,2-bis 12-fachen, insbesondere den 2- bis 4-fachen Wert der Viskosität der Ausgangsmischung erreicht hat, da bei noch weiterer Reaktion die Gefahr besteht, daß die Mischung ausharzt und einer Dispergierung nicht mehr zugänglich ist. In Ausnahmefällen kann jedoch auch ein Faktor bis zu 50 für den Viskositätsanstieg noch tragbar sein. Im allgemeinen kann gesagt werden, daß bei Verwendung höher viskoser Ausgangsmaterialien die Reaktion kürzer geführt wird, dagegen bei Verwendung von niedrig viskosen Ausgangsmaterialien durchaus auch die Endviskosität den 5-bis 12-fachen Wert der Ausgangsmischung erreichen kann.

Zur Herstellung erfindungsgemäßer Dispersionen werden die Polysiloxane a) und b) miteinander in dem gewünschten Verhältnis gemischt und das Gemisch, ggf. nach der mindestens teilweisen Umsetzung, in eine lagerbeständige, wäßrige Dispersion überführt. Die Herstellung der wäßrigen Dispersion erfolgt dabei in üblicher Weise, bevorzugt unter Verwendung eines oder mehrerer üblicher Dispergatoren. Im allgemeinen werden die, ggf. mindestens teilweise miteinander umgesetzten, Polysiloxane a) und b) mit dem Dispergator und Wasser gemischt und unter Rühren, eventuell unter weiterer Wasserzugabe, die Dispersion bereitet, wobei vorzugsweise anschließend zur Stabilisierung der Dispersion der pH-Wert - vorzugsweise mit Essigsäure, geeignet sind aber auch Glykol- und Salzsäure - auf Werte von unter 7, insbesondere 5 bis 6,8, eingestellt wird. Eventuell ist eine abschließende Hochdruckhomogenisierung angebracht. Schließlich kann, wenn gewünscht, evtl. von der Umsetzung her vorhandenes Lösungsmittel in bekannter Weise entfernt werden. Das Lösungsmittel kann auch, wenn gewünscht, vor der Dispergierung entfernt werden. Ähnlich wie im Fall der DE-A 3 723 697 ist es auch möglich, klare transparente Systeme, sogenannte Mikroemulsionen, dadurch herzustellen, daß das aus den Polysiloxanen a) und b) hergestellte Umsetzungsprodukt, der Emulgator, das Wasser und die Säure miteinander auf höhere Temperaturen, insbesondere 50 bis 80 °C erhitzt werden. Es sind also unter dem Begriff "Wäßrige Dispersionen" auch die so erhaltenen Mikroemulsionen zu verstehen.

Die verwendbaren Dispergatoren sind dem Fachmann bekannt. Als einsetzbare Verbindungen seien vor allem schwach-kationische und nichtionische Dispergatoren genannt. Beispiele sind ethoxilierte Alkohole, abgeleitet insbesondere von primären und/oder sekundären, linearen oder verzweigten Alkoholen mit 8 bis 16 C-Atomen und ethoxilierte Alkylphenole, wobei besonders bevorzugt wasserlösliche, d.h. höher ethoxilierte Produkte zu wählen sind. Es kommen aber auch ethoxilierte Amine, vorzugsweise in Salzform, in Betracht, und auch ethoxilierte Fettsäureamide sind geeignet, wobei hier besonders bevorzugt solche mit 8 bis 18 C-Atomen im Fettsäurerest eingesetzt werden. Schließlich seien als Dispergatoren auch die Silikontenside, also Verbindungen, wie sie durch Eth- und/oder Propoxilierung von Polysiloxanen entstehen, genannt. Als Beispiele kommen folgende Verbindungen in Betracht: 2,6,8-Trimethyl-4-nonyloxipentapolyethylenoxyethanol, Isotridecylethoxilat mit durchschnittlich 8 Ethylenoxideinheiten, Dodecyloxipropylamin, ethoxiliert mit durchschnittlich 12 Ethylenoxideinheiten in Form des Acetats, und mit durchschnittlich 15 Mol Ethylenoxid ethoxiliertes Stearinsäureamid. Von Fall zu Fall ist es besonders vorteilhaft, die Dispergatoren im Gemisch untereinander zu verwenden. Die obigen Angaben zu geeigneten Dispergatoren gelten unabhängig davon, ob Komponente a) mit Komponente b) vor der Dispergierung bereits teilweise umgesetzt wurde oder nicht. Die verwendete Menge an Dispergator bewegt sich im bekannten Rahmen und beträgt im allgemeinen 3 bis 70 Gew.%, bezogen auf zu emulgierende Aktivsubstanz. Auch die Konzentration der fertigen Dispersion liegt im üblichen Bereich und wird in der Regel auf 10 bis 60, insbesondere 15 bis 40, besonders bevorzugt 15 bis 30 Gew.% eingestellt.

Die erfindungsgemäßen wäßrigen Dispersionen sind als solche, d.h. ohne weitere Zusätze wie z.B. Katalysatoren oder Vernetzungsmittel, in hervorragender Weise zur Weichgriff-Ausrüstung von Fasermaterial, insbesondere Textilien, auf Basis von Polyacrylnitril, Polyester, Polyamid und Viskose, vor allem aber Wolle, Baumwolle und Baumwolle/Polyester geeignet. Dabei werden die Dispersionen vorzugsweise mit

Wasser soweit verdünnt, daß die Ausrüstungsflotten etwa 2 bis 50, insbesondere 2 bis 10 g der erfindungsgemäßen wäßrigen Dispersionen im Liter enthalten. Dann werden die Flotten in bekannter Weise, insbesondere durch Foulardieren oder Sprühen, auf das Material aufgebracht und die Materialien durch Trocknen fertiggestellt. Gegebenenfalls kann mit den erfindungsgemäßen Dispersionen in bekannter Weise bei entsprechend reduzierten Einsatzmengen auch nach dem Ausziehverfahren gearbeitet werden. Eine abschließende Kondensation ist bei Verwendung von nicht oder nur teilweise umgesetzten Produkten der Polysiloxane a) und b) zweckmäßig, kann aber ohne weiteres auch bei Einsatz der weitgehend oder vollständig umgesetzten Produkte vorgenommen werden und ist überdies immer dann angezeigt bzw. sogar notwendig, wenn den Flotten noch weitere bekannte Textilausrüstungsmittel, wie Appretur- und Oleophobier- bzw. Hydrophobiermittel und/oder Antistatika und/oder Zellulosevernetzer, ggf. mit den dazugehörigen Katalysatoren, zugesetzt werden, wobei durch diese Kombinationen günstige Gesamteffekte erreichbar sind.

Es war überraschend, daß es bei der Anwendung der erfindungsgemäßen Dispersionen, also allein durch die, ggf. miteinander umgesetzten, Polysiloxane a) und b) gelingt, hervorragende Weichgriffeffekte und gleichzeitig eine beachtliche Sprungelastizität ohne den Einsatz von Katalysatoren, also allein durch Erwärmen bzw. Erhitzen zu erhalten, ohne daß der Weißgrad über Gebühr in Mitleidenschaft gezogen wird. Besonders überraschend ist dabei noch, daß die genannten Effekte überaus wasch- und reinigungsbeständig sind und somit in ihrer Gesamtheit völlig überzeugen können.

Bisher ging nämlich die Fachwelt allgemein davon aus, daß derartige Effekte ohne Katalysatoren und zusätzliche Vernetzungsmittel in Kombination mit Silikonen nicht erzielbar sind (siehe DE-C 2 158 348).

Ein weiterer Vorteil der erfindungsgemäßen Dispersionen liegt in ihrer beachtlichen Lagerbeständigkeit, und auch die mechanische Stabilität läßt keine Wünsche offen. Nachdem erfindungsgemäß beständige Dispersionen mit guten Gesamteffekten zur Verfügung gestellt werden, erfüllen die neuen Produkte alle Erwartungen der Fachkreise.

In den nachfolgenden Beispielen werden die Prüfungen entsprechend standardisierten Vorschriften vorgenommen. Im einzelnen werden folgende Bestimmungsmethoden herangezogen:
Die Methode zur Bestimmung des Weißgrades wird nach GANZ durchgeführt. Diese Methode kann der Literatur entnommen werden (vergleiche hierzu Publikation "Methoden und Einsatzmöglichkeiten der farbmetrischen Weißbewertung von Textilien" von R. Griesser, CIBA-GEIGY-Broschüre Nr. 9140 d, Ausgabe 1981; siehe auch Textilveredlung 18 (1983), Nr. 5, Seiten 157 - 162). Für die Untersuchungen hat sich das "Elrepho 2000-Spektralphotometer für Remissionsmessungen" von Datacolor bewährt.

Bei der Bestimmung der Dehnung wird zuerst die Gesamtdehnung bestimmt. In das Prüfgerät (Du Pont-Dehnungstester) werden 150 X 20 mm große, in der elastischen Richtung ausgestanzte Proben auf 100 mm Länge eingespannt, dann langsam von Hand freigegeben und danach 5 Sekunden mit 500 g belastet. Dieser Vorgang wird 4 X wiederholt und die Gesamtlänge in mm abgelesen. Die bleibende Dehnung wird nun dadurch bestimmt, daß 150 X 12 mm ausgestanzte Proben am oberen Ende einer Meßstrecke (z.B. flaches, glattes Brett mit Maßstab) und nach Ausziehen auf 80% der Gesamtdehnung am unteren Ende der Meßstrecke befestigt werden. Nach einstündigem Strecken wird entlastet und nach einer weiteren Stunde des Aushängens die verbleibende Gesamtlänge in mm gemessen:

$$\text{Bleibende Dehnung} = \frac{\text{mittlere Gesamtlänge - 100}}{100} \times 100\ (\%)$$

Die nachfolgenden Beispiele sollen die Erfindung näher erläutern, wobei Teile = Gewichtsteile und Prozentangaben = Gewichtsprozent bedeuten.

**Beispiel 1**

A) Umsetzung und Emulgierung

A 1) 100 g eines trimethylsilylendblockierten Polydimethylsiloxane (Komponente b)) vom Molekulargewicht ca. 27.000 mit einer Viskosität (20 °C) von 1300 mPa.s mit durchschnittlich 5,5 an Si gebundenen Seitenketten der Formel

$-CH_2-CH_2-CH_2-NH-CH_2-CH_2-NHCO-CH_2-CH_2-CH_2-OH$

pro Molekül werden mit 20 g eines Polydimethylsiloxans mit endständigen Gruppen der Formel

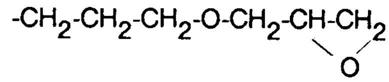

(Komponente a)) mit einer Epoxyzahl von ca. 0,21 und einem Molekulargewicht von ca. 945 in Substanz während 2 Stunden bei 80 bis 110 °C in einem Dreihalskolben, versehen mit Rührer und Thermometer, umgesetzt (Verhältnis 1:2,2 von amino- zu epoxifunktionellen Gruppen).

Durch die Umsetzung steigt die Viskosität von 980 mPa.s auf 11.400 mPa.s (bei 20 °C) an.

Zur Herstellung einer Dispersion werden 79,5 Teile Wasser, 0,5 Teile 60%ige Essigsäure und 5 Teile Emulgator (Isotridecylalkohol ethoxiliert mit durchschnittlich 8 Mol Ethylenoxid) vorgelegt, auf ca. 50 °C aufgeheizt, 15 g des obigen Umsetzungsproduktes langsam zugegeben, 5 Minuten gerührt und abgekühlt. Es wird eine mechanisch und thermisch stabile Dispersion erhalten (Dispersion A 1).

A 2) Ähnlich der Dispersion A 1) wird eine Dispersion A 2) bereitet, wobei aber die Polysiloxane a) und b) direkt, d.h. ohne vorherige Umsetzung dispergiert werden.

A 3) (Vergleichsbeispiel) In Anlehnung an den Stand der Technik wird eine Dispersion A 3) wie oben unter A 1) beschrieben, hergestellt, wobei als Aminogruppen enthaltendes Polysiloxan ein trimethylsilylendblockiertes, modifziertes Polydimethylsiloxan mit an Si gebundenen Seitenketten der Formel

$-CH_2-CH_2-CH_2-NH-CH_2-CH_2-NH_2$

(Aminzahl 0,6, Viskosität bei 20 °C ca. 1000 mPa.s) eingesetzt wird. Dieses Siloxan enthielt nur aminofunktionelle, jedoch keine amidofunktionellen Gruppen.

B) Ausrüstung

Mit den so erhaltenen feinteiligen Dispersionen A 1) bis A 3) werden unter Verwendung von 20 g/l der jeweiligen Dispersion in der Flotte bei zusätzlichem Einsatz von 1 ml/l 60%iger Essigsäure wäßrige Flotten hergestellt, mit denen Baumwollmaschenware (210 g/m²) foulardiert, auf 109 % Flottenaufnahme abgepreßt und dann jeweils unter 3 verschiedenen Bedingungen thermofixiert wird, und zwar 5 Minuten bei 150 °C (a), 3 Minuten bei 170 °C (b) bzw. 1 Minute bei 190 °C (c).

Die sehr guten Eigenschaften der erfindungsgemäßen Ausrüstung sind in der nachfolgenden Tabelle zusammengefaßt:

| Ausrüstung | A 1 (erfindungsgem.) | A 2 (erfindungsgem.) | A 3 (Vergleich) | unbehandelt (Wasser) |
|---|---|---|---|---|
| Kondensation (Thermo-fixierung) | a b c | a b c | a b c | a b c |
| Weißgrad | 217 199 182 | 214 198 180 | 188 161 153 | 211 191 184 |
| Griff | weicher, oberflächenglatter Griff mit innerer Fülle (waschbeständig) | | | |

Bei "Weißgrad"-Bestimmung entspricht eine höhere Zahl einer geringeren Vergilbung.

**Beispiel 2**

In einen Dreihalskolben mit Rührer und Thermometer werden 400 g des im Beispiel 1, A 1) beschriebenen Polysiloxans (Komponente b)) und 200 g eines trimethylsilylendblockierten modifizierten Polydimethylsiloxans (Molekulargewicht ca. 16.000) mit 12 seitenständigen Epoxigruppen (Struktur siehe Beispiel 1, Verhältnis 1: ca. 1,65 von aminofunktionellen zu epoxifunktionellen Gruppen), das zusätzlich

durchschnittlich 3 Einheiten entsprechend der nachfolgenden Formel

$$H_3C-Si-CH_2-CH_2-CH_2-(O-CH_2-CH_2)_{60}-OCOCH_3$$

pro Molekül enthielt, gegeben und unter ständigem Rühren auf eine Temperatur von 80 bis 100 °C gebracht. Bei dieser Temperatur wird das Gemisch solange umgesetzt, bis die Viskosität bei 100 °C von ca. 100 mPa.s (Ausgangsviskosität) auf 400 mPa.s angestiegen ist. Nach dem Abkühlen weist das Reaktionsgemisch eine Viskosität bei 20 °C von etwa 11.400 mPa.s auf.

Für die Bereitung einer Dispersion läßt man 150 g des wie oben beschrieben hergestellten Umsetzungsproduktes in 795 g Wasser, in dem 12,5 g eines mit durchschnittlich 7 Ethylenoxideinheiten und 37,5 g eines mit durchschnittlich 9 Ethylenoxideinheiten ethoxilierten Isotridecylalkohols gelöst sind, und dem 5 g 60%ige Essigsäure zugesetzt worden sind, bei einer Temperatur von 45 °C unter starkem Rühren langsam zufließen. Anschließend wird bei ca. 50 °C 5 Minuten nachgerührt und dann die erhaltene feinteilige Dispersion auf Raumtemperatur abgekühlt. Diese Dispersion ist temperatur- und lagerbeständig.

Ausrüstung

B 1) Mit der wie oben beschrieben hergestellten Dispersion wird eine wäßrige Ausrüstungsflotte unter Verwendung von 40 g/l der Dispersion und zusätzlichem Einsatz von 1 ml/l 60%iger Essigsäure hergestellt (Flotte B 1).

B 2) Zum Vergleich mit dem Stand der Technik wird eine wäßrige Dispersion unter Verwendung von 40 g/l einer 27 %igen, nicht-ionogenen , -Dihydroxypolydimethylsiloxandispersion, 4 g/l einer 52 %igen, nicht-ionogenen Polywasserstoffmethylsiloxandispersion und 4 g/l einer Lösung eines handelsüblichen Metallsalzkatalysators auf Basis von Zink-2-ethylhexoat (7,5 gew.%ig) sowie 1 ml/l 60%iger Essigsäure bereitet (Flotte B 2).

B 3) Zum Vergleich wird ohne Zusatz, also mit Wasser, behandelt.

Mit den wie oben beschrieben hergestellten Ausrüstungsflotten wird eine Baumwoll-(210 $g/m^2$) bzw. Polyestermaschenware (240 $g/m^2$) foulardiert (Flottenaufnahme ca. 105 %) und nach dem Trocknen bei 110 °C während 10 Minuten noch 5 Minuten bei 155 °C kondensiert.

Die hydrophilen Eigenschaften bzw. die bleibende Dehnung nach der Ausrüstung sind in der nachfolgenden Tabelle zusammengestellt:

| Flotte | bleibende Dehnung in % | Hydrophilie |
|---|---|---|
| | (Gesamtdehnung 128,5%) (Baumwollmaschenware) | (Einsinkzeit eines Wassertropfens in s) (Polyestermaschenware) |
| B 1 (erfindungsgemäß) | 14,5 | 6 (gute Hydrophilie) |
| B 2 (Stand d. Technik) | 14,75 | 500 (keine Hydrophilie) |
| B 3 (Wasser) | 21,0 | 800 (keine Hydrophilie) |

Die Vorteile der erfindungsgemäßen Ausrüstung werden deutlich sichtbar.

**Beispiel 3**

In der im Beispiel 1 genannten Apparatur werden 200 g eines Polysiloxans (Komponente b)) der unten angegebenen Art und 80 g eines Polysiloxans (Komponente a)) der ebenfalls unten angegebenen Art

(Verhältnis der amino- zu epoxifunktionellen Gruppen 1 : 5,6) unter ständigem Rühren auf eine Temperatur von 85° C gebracht. Bei der genannten Temperatur wird das Gemisch solange umgesetzt, bis die Viskosität(bei 85° C gemessen) auf den 3-fachen Wert der Ausgangsviskosität angestiegen ist. Nach dem Abkühlen des Reaktionsproduktes auf 20° C wird ein hochviskoses Produkt erhalten.

Das Polysiloxan b) ist ähnlich aufgebaut wie das im Beispiel 1 genannte Polysiloxan b), wobei aber die Hälfte der dort angegebenen modifizierten Aminogruppen durch Aminogruppen der Formeleinheiten

$-CH_2-CH(CH_3)-CH_2-NH-CH_2-CH_2-NH_2$ (= primäre Aminoalkylgruppen)

(Viskosität 450 mPa.s bei 20° C) ersetzt ist.

Das andere Polysiloxan (Komponente a)) ist ein trimethylsilylendblockiertes modifiziertes Polydimethylsiloxan (Molekulargewicht ca. 1750) mit durchschnittlich 5 an Si gebundenen seitenständigen Gruppen der Formel

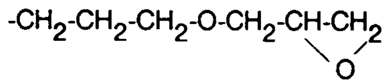 (Epoxizahl ca. 0,29)

pro Molekül.

Zur Bereitung einer Dispersion wird in gleicher Weise wie im Beispiel 2 beschrieben vorgegangen. Die erhaltene feinteilige Dispersion ist temperatur- und lagerbeständig.

Dieses Beispiel wurde mit 200 g des Polysiloxans a) (statt 80 g) wiederholt, wobei eine ähnlich gute Dispersion resultierte.

**Beispiel 4**

Das Beispiel 3 wird wiederholt, wobei zur Herstellung des Umsetzungsproduktes in gleicher Weise unter Verwendung eines ähnlichen Polysiloxans (b) wie in Beispiel 1 gearbeitet wird, in dem jedoch (statt 50 % wie in Beispiel 3) in
Beispiel 4 a) 25% der modifizierten Amino/amido-gruppen gegen primäre Aminoalkylgruppen bzw. in
Beispiel 4 b) 75% der modifizierten Amino/amido-gruppen gegen primäre Aminoalkylgruppen
der in Beispiel 3 angegebenen Art ausgetauscht worden sind. Das Polysiloxan (Komponente b) von Beispiel 4 a) besaß eine Viskosität von 800 mPa.s bei 20° C, das von Beispiel 4 b) eine Viskosität von 300 mPa.s bei 20° C.

**Beispiel 5**

Das Beispiel 4 a) wird unter Verwendung von 200 g eines anderen Polysiloxans als Komponente a) (modifiziertes Dimethylpolysiloxan mit endständigen Gruppen der Formel

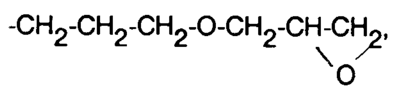

(Molekulargewicht ca. 7500) wiederholt, d.h. daß auf 1 aminofunktionelle (stickstoffhaltige) Gruppe von Komponente b) 1,3 epoxifunktionelle Gruppen von Komponente a) kommen.

Mit den nach Beispielen 3 bis 5 hergestellten Dispersionen wurden unterschiedliche Materialien, z.B. auch Baumwollsegeltuch oder Baumwoll/Polyestertrikotware, behandelt. Auch hier bestätigte sich die geringere Vergilbungstendenz, die durch den Einsatz von Amidogruppen enthaltenden Siloxanen gegenüber nur aminofunktionellen Siloxanen resultiert.

## Patentansprüche

**1.** Wäßrige Dispersion, welche als Komponenten

a) ein Polysiloxan mit durchschnittlich mindestens zwei an verschiedene Si-Atome gebundenen Resten pro Molekül, die je eine Epoxygruppe enthalten,

b) ein Polysiloxan mit durchschnittlich einer oder mehreren Stickstoff enthaltenden Gruppen pro Siloxanmolekül, wobei in diesen Gruppen mindestens ein Teil der Stickstoffatome in Form von primären oder sekundären Aminogruppen vorliegt und durchschnittlich mindestens zwei Stickstoffatome pro Polysiloxanmolekül anwesend sind,

enthält
und /oder welche ein Produkt enthält, das durch mindestens teilweise Umsetzung der Komponente a) mit Komponente b) entsteht, dadurch gekennzeichnet, daß in mindestens 25 % aller Stickstoff enthaltenden Gruppen von Komponente b) eine Amidogruppe vorliegt und daß in mindestens 50 % aller Stickstoff enthaltenden Gruppen von Komponente b) eine primäre oder sekundäre Aminogruppe vorliegt.

**2.** Wäßrige Dispersion nach Patentanspruch 1), dadurch gekennzeichnet, daß in 50 bis 100 % aller Stickstoff enthaltenden Gruppen von Komponente b) eine Amidogruppe vorliegt.

**3.** Wäßrige Dispersion nach Patentanspruch 1 oder 2, dadurch gekennzeichnet, daß sie als Komponente b) ein Polysiloxan enthält, in dem eine oder mehrere Gruppen der Formel

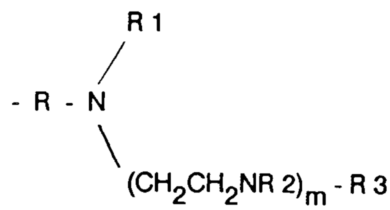

an je ein Si-Atom gebunden sind, worin
m = 0 oder 1 ist,
R einen zweiwertigen Kohlenwasserstoffrest mit 2 bis 10 C-Atomen, bevorzugt mit 3 bis 4 C-Atomen darstellt, der durch eine Sauerstoffbrücke unterbrochen sein kann, R1 und R2 unabhängig voneinander für Wasserstoff, einen Alkylrest mit 1 bis 4 Kohlenstoff-atomen oder für den Rest -COR4 stehen, mindestens 25 % der Summe der Reste R1 und R2 jedoch für den Rest -COR4 stehen,
R3 für Wasserstoff oder einen Alkylrest mit 1 bis 4 C-Atomen steht und
R4 ein, gegebenenfalls substituierter, Alkylrest mit 1 bis 8 Kohlenstoffatomen ist.

**4.** Wäßrige Dispersion nach Patentanspruch 3, dadurch gekennzeichnet, daß ein Teil oder alle der Reste R4 für einen Alkylrest mit 1 bis 4 C-Atomen stehen, der durch eine Hydroxylgruppe, vorzugsweise eine endständige Hydroxylgruppe, substituiert ist.

**5.** Wäßrige Dispersion nach einem oder mehreren der Patentansprüche 1 bis 4, dadurch gekennzeichnet, daß in Komponente a) die Epoxygruppen über Alkylengruppen mit 2 bis 8, vorzugsweise 4 bis 5 Kohlenstoffatomen an je ein Si-Atom gebunden sind, wobei diese Alkylengruppen durch eine Sauerstoffbrücke unterbrochen sein können und daß sich die Epoxygruppen am Ende der Hauptkette oder am Ende einer Seitenkette des Polysiloxans befinden.

**6.** Wäßrige Dispersion nach einem oder mehreren der Patentansprüche 1 bis 5, dadurch gekennzeichnet, daß Komponente a) außer Resten mit Epoxygruppen noch Polyoxyethylen- und/oder Polyoxypropylengruppen, bevorzugt in einer oder mehreren Seitenketten, enthält.

**7.** Wäßrige Dispersion nach einem oder mehreren der Patentansprüche 1 bis 6, dadurch gekennzeichnet, daß Komponente a) und Komponente b) lineare Polydimethylsiloxane sind, in denen ein Teil der Methylgruppen, jedoch höchstens eine Methylgruppe pro Si-Atom, durch Reste ersetzt sind, welche Stickstoff enthaltende Gruppen (Komponente b) oder Epoxygruppen (Komponente a)) sowie ggf. Polyoxyethylengruppen (Komponente a)) enthalten.

**8.** Wäßrige Dispersion nach einem oder mehreren der Patentansprüche 1 bis 7, dadurch gekennzeichnet, daß die Komponenten a) und b) jeweils eine Viskosität bei 20 °C von 20 bis 50.000, insbesondere 20 bis 10.000 mPa.s aufweisen.

**9.** Wäßrige Dispersion nach einem oder mehreren der Patentansprüche 1 bis 8, dadurch gekennzeichnet, daß Komponente a) eine Epoxyzahl von 0,02 bis 1,0, insbesondere 0,05 bis 1,0 aufweist.

**10.** Wäßrige Dispersion nach einem oder mehreren der Patentansprüche 1 bis 9, dadurch gekennzeichnet, daß sie die Komponenten a) und b) in solchen Mengen enthält, daß 0,8 bis 14, insbesondere 2 bis 10, Epoxygruppen aus Komponente a) pro primärer bzw. sekundärer Aminogruppe von Komponente b) vorliegen.

**11.** Wäßrige Dispersion nach einem oder mehreren der Patentansprüche 1 bis 10, dadurch gekennzeichnet, daß sie ein Produkt enthält, das durch teilweise Umsetzung von Komponente a) mit Komponente b) unter solchen Zeit- und Temperaturbedingungen entsteht, daß das Umsetzungsprodukt eine um den Faktor 1,2 bis 12, insbesondere 2 bis 4, höhere Viskosität besitzt als das für diese Umsetzung verwendete Gemisch der Komponenten a) und b).

**12.** Wäßrige Dispersion nach einem oder mehreren der Patentansprüche 1 bis 11, dadurch gekennzeichnet, daß sie zusätzlich einen oder mehrere Dispergatoren enthält.

**13.** Verfahren zur Herstellung einer wäßrigen Dispersion gemäß einem oder mehreren der Patentansprüche 1 bis 12, dadurch gekennzeichnet, daß
ein Polysiloxan (Komponente a)) mit durchschnittlich mindestens zwei an verschiedene Si-Atome gebundenen Resten pro Molekül, die je eine Epoxygruppe enthalten, mit einem
Polysiloxan (Komponente b)) mit einer oder mehreren Stickstoff enthaltenden Gruppen, wobei in diesen Gruppen Stickstoffatome in Form von primären oder sekundären Aminogruppen oder in Form von Amidogruppen vorliegen und durchschnittlich mindestens zwei Stickstoffatome pro Polysiloxanmolekül anwesend sind, wobei in mindestens 25 % aller Stickstoff enthaltenden Gruppen von Komponente b) eine Amidogruppe vorliegt und in mindestens 50 % aller Stickstoff enthaltenden Gruppen von Komponente b) eine primäre oder sekundäre Aminogruppe vorliegt, mindestens teilweise umgesetzt und das erhaltene Produkt in Wasser dispergiert wird, wobei ggf. Lösungsmittel vor oder nach der Dispergierung entfernt wird.

**14.** Verfahren nach Patentanspruch 13, dadurch gekennzeichnet, daß die Umsetzung in Substanz oder in einem organischen Lösungsmittel unter solchen Zeit-und Temperaturbedingungen durchgeführt wird, daß das Umsetzungsprodukt eine um den Faktor 1,2 bis 12, insbesondere 2 bis 4, höhere Viskosität besitzt als das für die Umsetzung verwendete Gemisch der Komponenten a) und b).

**15.** Verfahren nach Patentanspruch 13 oder 14, dadurch gekennzeichnet, daß die Umsetzung bei 10 bis 220 °C, insbesondere 60 bis 90 °C, während einer Zeit von 0,5 bis 24, insbesondere 1 bis 5 Stunden durchgeführt wird.

**16.** Verfahren nach einem oder mehreren der Patentansprüche 13 bis 15, dadurch gekennzeichnet, daß der pH-Wert der wäßrigen Dispersion mittels Zugabe von Säure auf einen Wert von 5 bis 6,8 eingestellt wird.

**17.** Verwendung einer Dispersion gemäß einem oder mehreren der Patentansprüche 1 bis 12 zur Behandlung von Fasermaterialien, insbesondere Textilmaterialien.

**18.** Verwendung einer Dispersion gemäß Patentanspruch 17, dadurch gekennzeichnet, daß das mit der Dispersion behandelte Fasermaterial anschließend bei 80 bis 125 °C getrocknet und gegebenenfalls anschließend 0,5 bis 8 Minuten auf 130° bis 190 °C erhitzt wird.